Europäisches Patentamt

European Patent Office

Office européen des brevets

(19)

(11) Numéro de publication : **0 141 694**
**B1**

(12)                          **FASCICULE DE BREVET EUROPÉEN**

(45) Date de publication du fascicule du brevet :
**11.11.87**

(51) Int. Cl.⁴ : **B 30 B   9/08**, F 16 P   3/12

(21) Numéro de dépôt : **84401739.2**

(22) Date de dépôt : **29.08.84**

(54) **Pressoir pour vendanges muni d'un dispositif de sécurité.**

(30) Priorité : **09.09.83 FR 8314394**

(43) Date de publication de la demande :
**15.05.85 Bulletin 85/20**

(45) Mention de la délivrance du brevet :
**11.11.87 Bulletin 87/46**

(84) Etats contractants désignés :
**AT CH DE IT LI**

(56) Documents cités :
**DE-C-   955 187**
**FR-A-  2 284 438**

(73) Titulaire : **CONSTRUCTIONS MECA-METALLIQUES
CHALONNAISES
F-49290 Chalonnes sur Loire (FR)**

(72) Inventeur : **Bernheim, Jean-Pierre
54 Rue du Quinconce
F-49000 Angers (FR)**

(74) Mandataire : **Polus, Camille et al
c/o Cabinet Lavoix 2, Place d'Estienne d'Orves
F-75441 Paris Cedex 09 (FR)**

EP 0 141 694 B1

Jouve, 18, rue St-Denis, 75001 Paris, France

## Description

La présente invention a pour objet un pressoir pour vendanges, du genre comportant une cage rotative cylindrique d'axe horizontal ou incliné, muni intérieurement de longerons parallèles entre eux et à son axe, cette cage étant traversée par une vis axiale solidaire de plateaux de serrage.

Dans le type de pressoir considéré, la cage est en outre munie à une extrémité d'une première porte annulaire fixe, présentant à sa partie supérieure une ouverture pour le chargement des vendanges, et à son extrémité opposée d'une seconde porte de sortie des vendanges après un cycle de pressurage. Des roues dentées d'entraînement en rotation de la cage sont montées coaxialement aux extrémités de cette dernière, et l'ouverture de la porte annulaire est surmontée d'une trémie de chargement.

L'expérience montre que la mise en œuvre d'un tel pressoir n'est pas sans danger pour les utilisateurs : en effet, durant la phase de chargement et le cycle de pressurage des vendanges, les longerons se succèdent sous l'ouverture de chargement et au ras de celle-ci, de sorte qu'il peut arriver qu'un opérateur ayant introduit son bras pour une raison quelconque à l'intérieur de l'ouverture de chargement, voit celui-ci happé par un longeron. Il peut de ce fait en résulter un grave accident, le bras pouvant être broyé entre le longeron et le bord de l'ouverture de chargement, ou encore des doigts de la main de l'opérateur pouvant être purement et simplement sectionnés, des accidents de ce genre s'étant produits malgré la faible vitesse de rotation des longerons.

L'invention a donc pour but d'équiper le pressoir d'un dispositif de sécurité susceptible de prévenir tout accident de ce genre.

Subsidiairement l'invention a pour but de proposer un pressoir dont la construction soit sensiblement moins onéreuse et la mise en œuvre plus simple que celles des pressoirs connus à deux portes annulaires situées de part et d'autre de la partie centrale de la cage, chacune de ces portes étant percée d'une ouverture susceptible d'être utilisée alternativement comme ouverture de chargement et comme ouverture de déchargement, après rotation de 180°.

Suivant l'invention, le dispositif de sécurité est monté entre la trémie et l'ouverture de chargement de la porte annulaire, et comporte des moyens de commande automatique de l'arrêt de la rotation de la cage et des longerons au cas où un corps étranger introduit dans l'ouverture de chargement, tel que la main d'un opérateur, se trouverait entraîné par un longeron contre le bord de l'ouverture de chargement, et le dispositif de sécurité comporte au moins un volet pivotant et de préférence deux placés respectivement au-dessus d'un bord radial de l'ouverture de chargement et montés à pivotement autour d'un axe parallèle à l'axe de la cage et aux longerons, ces volets étant articulés sur une tringlerie de transmission coopérant avec un contact électrique susceptible d'être actionné par le déplacement de la tringlerie provoqué par un basculement d'un des volets vers le bord de l'ouverture de chargement, afin de commander automatiquement l'arrêt de la rotation des longerons et de la cage dès que le volet a basculé d'un angle prédéterminé.

Bien entendu, cet angle prédéterminé de basculement du volet qui déclenche l'arrêt de la rotation des longerons est choisi pour que la main ou le bras engagé entre le volet et le longeron puisse être dégagé sans difficulté dès l'arrêt de la rotation de la cage et des longerons, en faisant simplement basculer davantage le volet.

Dans le cas où le dispositif de sécurité ne comporte qu'un seul volet, l'extrémité supérieure de celui-ci, opposée à l'ouverture de chargement, coopère avec un ressort de rappel du volet en position de repos, et avec un contact électrique relié aux organes de commande de la cage en rotation. En position de repos normal, le volet est éloigné du contact électrique et actionne celui-ci lorsqu'il a basculé de l'angle précité.

Suivant une autre particularité de l'invention, le pressoir est muni d'une porte de déchargement à manœuvre manuelle, articulée sur la partie terminale de la cage opposée à la porte annulaire, cette porte de déchargement pouvant être amovible.

Cet agencement simplifie la construction et par conséquent le prix de revient du pressoir, ce qui peut être préféré par certains utilisateurs aux pressoirs à deux portes annulaires à télécommande automatique.

D'autres particularités et avantages de l'invention apparaîtront au cours de la description qui va suivre, faite en référence au dessin annexé qui en illustre une forme de réalisation à titre d'exemple non limitatif.

La Fig. 1 est une vue simplifiée en élévation longitudinale d'un pressoir pour vendanges selon l'invention, muni d'une porte de déchargement à manœuvre manuelle.

La Fig. 2 est une vue en élévation latérale, à échelle agrandie, de la porte de déchargement manuelle du pressoir de la figure 1.

La Fig. 3 est une vue de dessus d'un mode de réalisation préféré du dispositif de sécurité conforme à l'invention, susceptible d'équiper le pressoir de la figure 1, les volets de ce dispositif étant en position normale de repos.

La Fig. 4 est une vue analogue à la figure 3, montrant le dispositif de sécurité en position active de commande d'arrêt de la rotation de la cage et des longerons, consécutivement à un basculement d'un des volets.

La Fig. 5 est une vue en élévation latérale du dispositif de sécurité suivant la direction de la flèche K de la figure 3, les volets étant en position normale inactive.

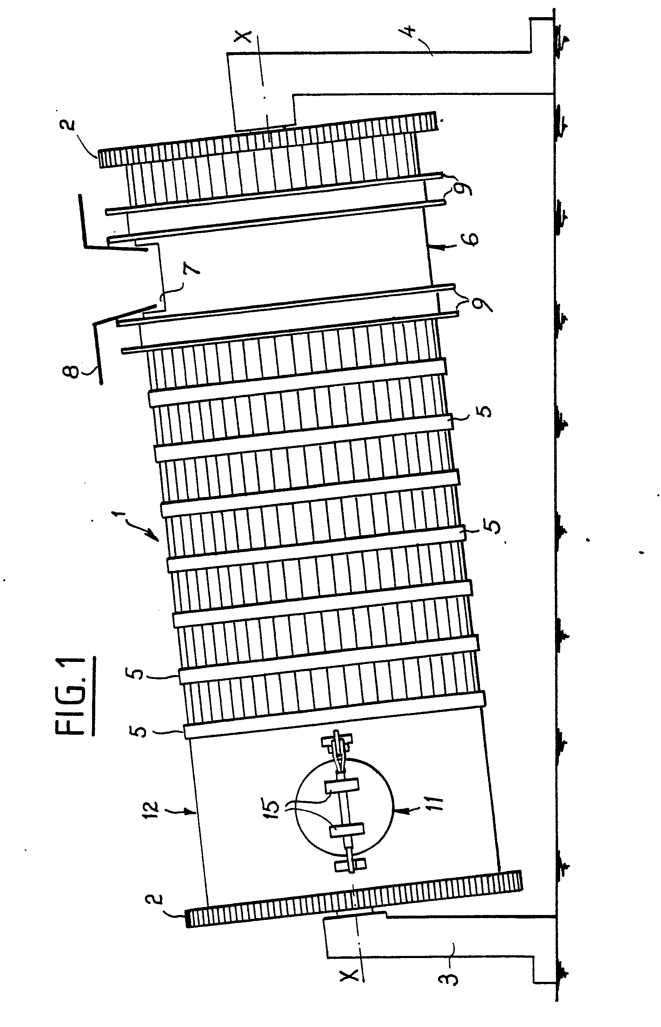

Le pressoir pour vendanges schématiquement représenté à la figure 1, comporte une cage rotative cylindrique 1 d'axe X-X incliné sur l'horizontale, cette cage étant pourvue à ses extrémités opposées de roues dentées 2 d'entraînement et supportée à ses extrémités par les montants 3, 4 d'un bâti fixe.

De façon connue en soi, la cage 1 comprend dans sa partie centrale un ensemble de cerclages 5 coaxiaux à l'axe X-X et assurant la rigidité de la cage, et une porte annulaire 6 au voisinage de son extrémité supérieure, cette porte fixe 6 étant percée à sa partie supérieure d'une ouverture 7 de chargement des vendanges par une trémie 8, et encadrée de chaque côté par une paire de cercles 9 de renfort.

La structure générale du pressoir et ses moyens d'entraînement en rotation et de commande sont connus en soi et ne seront donc pas décrits en détail. Cette structure et les moyens d'entraînement peuvent être par exemple similaires à ceux décrits dans le brevet français FR-A-2 284 438.

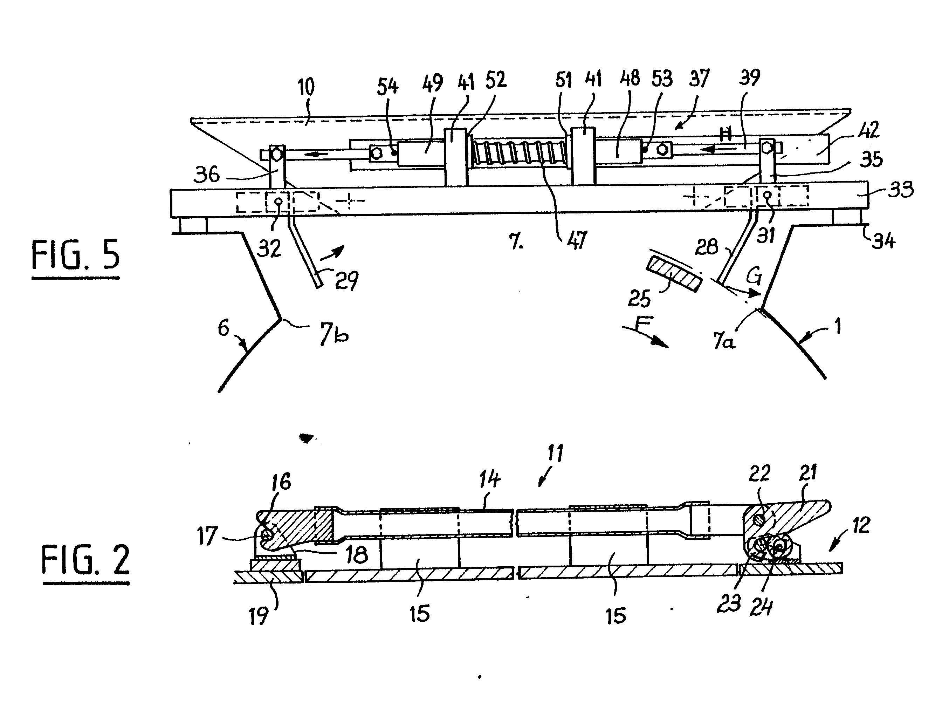

Suivant une particularité du pressoir visé par l'invention, celui-ci est équipé dans sa partie terminale opposée à la porte annulaire 6, d'une porte 11 de sortie ou de déchargement des vendanges à manœuvre manuelle. Cette porte a un contour circulaire dans l'exemple représenté à la figure 1, mais peut naturellement avoir une forme quelconque. La porte 11 se présente sous la forme d'un segment cylindrique pour pouvoir convenablement obturer l'ouverture correspondante de la partie cylindrique terminale 12 de la cage 1, et elle est munie d'un système de manœuvre de type connu en soi, par exemple celui illustré aux figures 1 et 2.

Le système de manœuvre et de fermeture de la porte 11 comprend ainsi une pièce tubulaire 14 s'étendant diamétralement à la porte 11 à laquelle elle est fixée par des supports 15, l'une des extrémités de la pièce 14 présentant un évidement 16 susceptible de recevoir un axe 17 de basculement solidaire d'oreilles 18 fixées sur la paroi 19 de la partie terminale 12, au bord de l'ouverture destinée à recevoir la porte 11.

Complémentairement, l'extrémité opposée de la pièce tubulaire 14 est munie d'un organe basculant 21 de verrouillage de la porte 11 sur la paroi 19, cet organe 21 pouvant à cet effet basculer autour d'un axe 22 fixé à l'extrémité de la pièce 14 et présentant un bec terminal 23 susceptible de venir en prise autour d'un axe 24 fixé à la paroi 19 de la partie terminale 12 de la cage.

La porte 11 peut donc ainsi être manuellement mise en place et verrouillée durant la phase de chargement et le cycle de pressurage du pressoir, et être enlevée sans difficulté par l'opérateur, à qui il suffit de faire basculer l'organe 21 pour déverrouiller la pièce 14, ce qui permet d'enlever la porte 11 pour décharger les moûts après un cycle de pressurage.

Il est évident que le mode de réalisation de la porte 11 qui vient d'être décrit n'a été donné qu'à titre d'exemple, et peut être remplacé par tout autre moyen équivalent.

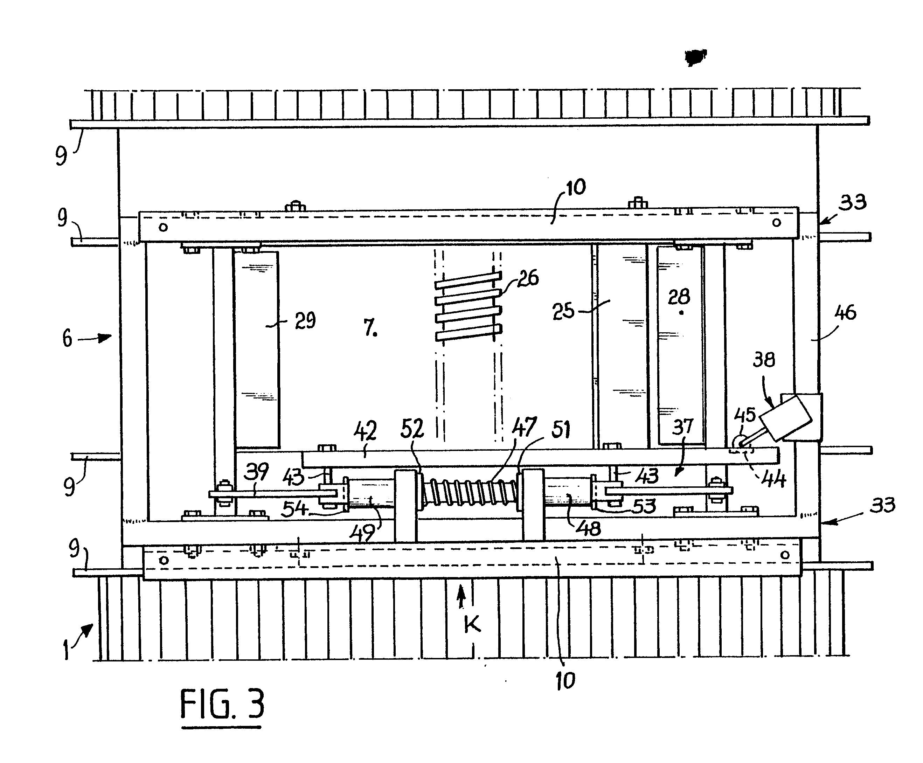

La cage 1 est munie intérieurement, de façon connue en soi, de longerons 25 dont un est visible aux figures 3 à 5, parallèles entre eux et à son axe X-X, une vis 26 traversant axialement la cage 1 et coopérant de façon connue avec des plateaux de serrage non représentés.

On décrira maintenant le dispositif de sécurité plus particulièrement visé par l'invention, en se référant aux figures 3 à 5.

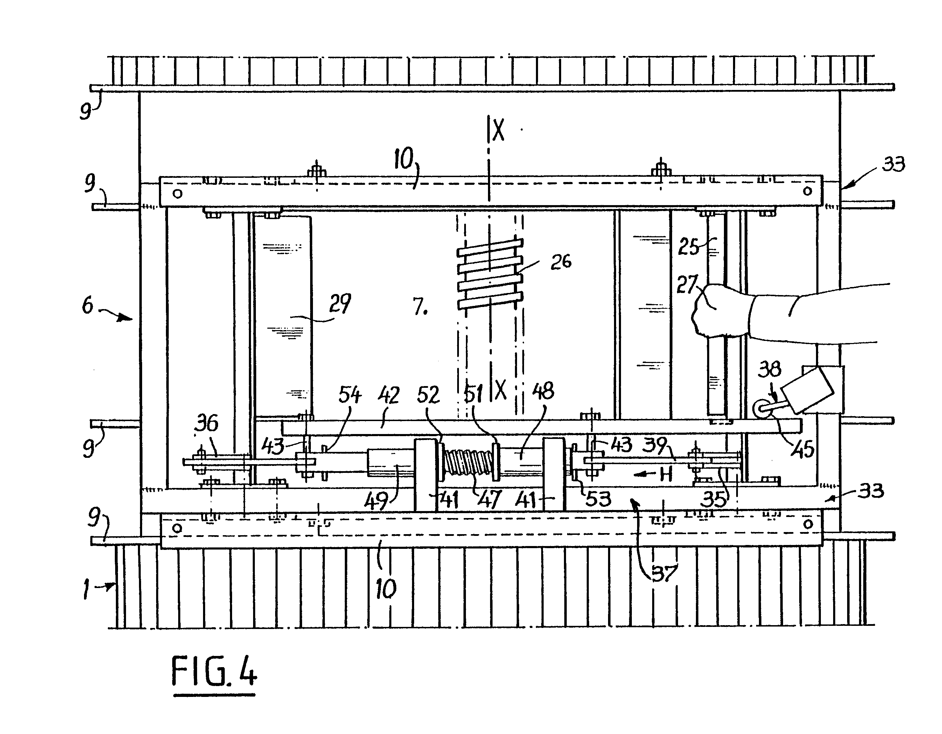

Ce dispositif est monté entre la trémie 8 et l'ouverture 7 de chargement de la porte annulaire 6, seul le support 10 de la trémie 8 ayant été représenté sur les fig. 3 à 5 pour une meilleure compréhension du dessin. Ce dispositif de sécurité comprend des moyens de commande automatique de l'arrêt de la rotation de la cage 1 et des longerons 25 intérieurs à celle-ci, au cas où un corps étranger introduit dans l'ouverture 7, tel que la main 27 d'un opérateur (Fig. 4), se trouverait entraîné par un longeron 25 contre le bord 7a ou 7b parallèle à l'axe X-X de l'ouverture 7.

Dans le mode de réalisation illustré aux figures 3 à 5, ce dispositif de sécurité est constitué de la manière suivante : il comprend deux volets 28, 29, respectivement placés au-dessus d'un bord radial 7a, 7b de l'ouverture 7, et montés basculant chacun autour d'un axe respectif 31, 32 fixé parallèlement à l'axe X-X sur un cadre rectangulaire 33 fixé à l'armature 34 de la cage 1, et s'étendant au-dessus et autour de l'ouverture 7. Les volets 28, 29 peuvent être constitués par des tôles convenablement pliées, et orientés dans leur position normale de repos (Fig. 5) de façon à s'étendre dans l'ouverture 7 à une certaine distance des bords 7a, 7b. De l'autre côté de leurs axes 31, 32 de basculement, les volets 28, 29 comprennent des parties terminales 35, 36 articulées sur une tringlerie 37 de transmission coopérant avec un contact électrique 38. Les parties terminales 35, 36 constituent des bras perpendiculaires aux axes 31, 32, et leurs extrémités sont articulées sur les extrémités opposées d'une tringle 39 s'étendant le long de l'ouverture 7 perpendiculairement à l'axe X-X.

La tringle 39 est montée à coulisse, par sa partie centrale, dans deux supports 41 fixés au cadre 33, et une glissière 42 est fixée latéralement à la tringle 39 par des boulons 43, de manière à pouvoir exécuter des va-et-vient solidairement avec la tringle 39 et parallèlement à celle-ci. Une encoche ou échancrure 44 est ménagée dans l'une des extrémités de la glissière 42, par exemple celle qui est contiguë au volet 28 (Fig. 3 et 4) et reçoit la roulette 45 du contact électrique 38 lorsque le dispositif de sécurité est en position normale inactive (Fig. 3). Le contact 38 est monté pivotant sur une traverse 46 du cadre 33, de façon que sa roulette 45 puisse sortir de l'échancrure 44 lorsque la glissière 42 exécute une translation dans un sens ou dans l'autre. Complémentairement, le contact 38 est relié par des connexions non représentées, aux organes de commande de l'entraînement en rotation de l'ensemble de la cage 1 et des longerons 25.

Suivant une particularité de l'invention, le dispositif de sécurité est muni de moyens élastiques de rappel des volets 28, 29 et de la tringlerie 37 dans leur position inactive des figures 3 et 5, après basculement dans la position active de la figure 4. Dans le mode de réalisation décrit, ces moyens de rappel comprennent un ressort hélicoïdal 47 monté coaxialement autour de la tringle 39 entre les supports 41, ainsi qu'à chaque extrémité du ressort 47, une douille 48, 49 montée coulissante dans le support 41 correspondant, autour de la tringle 39.

Chaque douille 48, 49 est pourvue d'une collerette terminale 51, 52 intercalée entre le ressort 47 et le montant contigu 41, donc constamment sollicitée contre ce dernier par le ressort 47.

Par ailleurs, l'invention prévoit des moyens de solidarisation des douilles 48, 49 avec la tringle 39 l'une et l'autre alternativement dans les deux sens de translation de la tringle 39. Dans l'exemple représenté, ces moyens consistent, pour chaque douille 48, 49, en une goupille correspondante 53, 54 traversant radialement la tringle 39 près de l'extrémité de la douille respective 48, 49 opposée à sa collerette 51, 52. Les goupilles 53, 54 font saillie de la tringle 39, de façon à pouvoir entraîner la douille associée 48 ou 49 à coulisse vers l'intérieur des supports 41 lorsque la tringle 39 se déplace dans un sens, et à laisser la même douille 48 ou 49 bloquée en butée par sa collerette 51 ou 52 contre le support 41, lorsque la tringle 39 se déplace en sens inverse.

Le fonctionnement du dispositif de sécurité qui vient d'être décrit est le suivant.

La position de repos inactive des volets 28, 29 est représentée aux figures 3 et 5, les longerons 25 étant supposés tourner dans le sens horaire de la flèche F. Le ressort de rappel 47 maintient les collerettes 51, 52 en appui contre les supports respectifs 41, et la roulette 45 du contact 38 de commande de l'arrêt du pressoir est engagée à l'intérieur de l'échancrure 44. Les volets 28, 29 sont dans des positions angulaires identiques par rapport aux bords 7a, 7b de l'ouverture 7, à une certaine distance angulaire de ceux-ci.

Si maintenant, tandis que les longerons 25 tournent dans le sens F, un opérateur introduit sa main 27 dans l'ouverture 7, et qu'il laisse imprudemment happer celle-ci par un longeron 25, cette main 27 (Fig. 4) est appliquée par le longeron 25 contre le volet 28, qui bascule donc dans le sens anti-horaire indiqué par la flèche G (Fig. 5). Le volet 28 bascule donc autour de l'axe 31 et son bras 35 entraîne la tringle 39 en translation dans le sens de la flèche H (Fig. 4 et 5). La goupille 53 entraîne de ce fait la douille 48 en translation en même temps que la tringle 39, et après un angle de basculement prédéterminé du volet 28, la douille 48 vient se placer dans la position de la figure 4, en comprimant le ressort 47. Par contre, la douille 49 reste évidemment assujettie au montant contigu 41 par sa collerette 52, tandis que sa goupille associée 54 se déplace avec la tringle 39 vers le volet 29, lequel pivote par conséquent autour de son axe 32 dans le sens inverse du volet 29, comme indiqué par la flèche portée à la figure 5.

Dès que l'angle prédéterminé de basculement du volet 28 est atteint, la roulette 45 sort de l'échancrure 44, le contact 38 pivote et déclenche automatiquement l'arrêt complet du pressoir, c'est-à-dire l'arrêt instantané de la rotation des longerons 25 en particulier. Du fait qu'à ce moment il reste encore un débattement angulaire de sécurité entre le volet 28 et le bord contigu 7a, l'opérateur peut sans difficulté retirer sa main 27 en faisant basculer un peu plus le volet 28.

Le même processus que celui qui vient d'être décrit peut évidemment se répéter avec le volet opposé 29.

Ainsi, le dispositif de sécurité selon l'invention écarte tout risque d'accident consécutif à l'introduction de la main ou du bras d'un utilisateur du pressoir dans l'ouverture 7 de chargement pendant la rotation de la cage 1.

L'invention n'est pas limitée au mode de réalisation décrit et peut comporter des variantes d'exécution. Ainsi le dispositif pourrait ne comporter qu'un seul volet, placé sur l'un des bords 7a ou 7b de l'ouverture 7, ce volet coopérant avec un ressort de rappel et pouvant déclencher un contact électrique de commande de l'arrêt du pressoir après une rotation prédéterminée du volet. De même, on pourrait également prévoir deux volets chacun associé à un ressort et à un contact, placés chacun au-dessus d'un bord 7a, 7b. D'autre part, l'axe X-X du pressoir peut être horizontal.

Il est évident que le dispositif de sécurité selon l'invention peut équiper des pressoirs à deux portes annulaires au lieu d'une, la porte manuelle de sortie de l'exemple décrit étant donc remplacée par une porte annulaire.

## Revendications

1. Pressoir pour vendanges, comportant une cage rotative (1) cylindrique d'axe horizontal ou incliné, munie intérieurement de longerons (25) parallèles entre eux et à son axe (X-X), traversée par une vis axiale (26) solidaire de plateaux de serrage, cette cage (1) étant en outre munie à une extrémité d'une première porte annulaire fixe (6) présentant à sa partie supérieure une ouverture (7) pour le chargement des vendanges, et à son extrémité opposée (12) d'une seconde porte de sortie des vendanges après un cycle de pressurage, des roues dentées (2) d'entraînement en rotation de la cage (1) étant montées coaxialement aux extrémités de cette dernière, et l'ouverture de la porte annulaire (6) étant surmontée d'une trémie (8) de chargement, caractérisé en ce qu'il comprend un dispositif de sécurité monté entre la trémie (8) et l'ouverture (7) de chargement de la porte annulaire (6), et qui comporte des moyens (28, 29, 37, 38) de commande automatique de l'arrêt de la rotation de la cage (1) et des longerons (25) au cas où un corps étranger introduit dans l'ouverture de chargement, tel que la main (27) d'un opérateur, se trouverait entraîné par un longeron (25) contre le bord (7a, 7b) de l'ouverture (7) de chargement et le dispositif de sécurité comporte au moins un volet (28) pivotant et de préférence deux (28, 29) placé(s) respectivement au-dessus d'un bord radial (7a, 7b) de l'ouverture (7) de chargement et monté(s) basculants autour d'un axe (31, 32) parallèle à l'axe (X-X) de la cage (1) et aux longerons (25), ce (ou ces) volets étant articulé(s) sur une tringlerie (37) de transmission coopérant avec un contact électrique (38) susceptible d'être actionné par le déplacement de la tringlerie (37) provoqué par un basculement du volet (28, 29) vers le bord (7a, 7b) de l'ouverture (7) de chargement, afin de commander automatiquement l'arrêt de la rotation des longerons (25) et de la cage (1) dès que le volet (28, 29) a basculé d'un angle prédéterminé.

2. Pressoir selon la revendication 1, caractérisé en ce que, le dispositif de sécurité comportant deux volets pivotants (28, 29), chacun de ces volets est solidarisé à l'une de ses extrémités avec un bras (35, 36) perpendiculaire à l'axe (31, 32) de basculement du volet (28, 29) dont une partie terminale est articulée sur une tringle (39) montée à coulisse dans des supports fixes (41) et à laquelle est fixée une glissière (42), coopérant avec le contact électrique (38) de manière à déclencher ce dernier après une course prédéterminée de la tringle (39) et de la glissière (42), des moyens élastiques (47) de rappel des volets (28, 29) et de la tringle (39) étant disposés entre les supports (41) de la tringle (39).

3. Pressoir selon la revendication 2, caractérisé en ce que la glissière (42) comporte une encoche (44) dans laquelle est engagé le contact électrique (38) lorsque les volets (28, 29) sont dans leur position normale, éloignée des bords contigus (7a, 7b) de l'ouverture (7) de chargement, la translation de la glissière (42) provoquée par le basculement d'un volet (28, 29) faisant sortir de l'encoche (44) le contact (38) qui déclenche alors l'arrêt de la rotation des longerons (25) et de la cage (1).

4. Pressoir selon l'une des revendications 2 et 3, caractérisé en ce que les moyens de rappel de la tringle (39) et des volets (28, 29) comprennent un ressort hélicoïdal (47) monté coaxialement autour de la tringle (39) entre les supports fixes (41), et, à chaque extrémité du ressort (47), une douille (48, 49) montée coulissante dans le support correspondant (41) autour de la tringle (39), chaque douille (48, 49) étant pourvue d'une collerette terminale (51, 52) constamment sollicitée par le ressort (47) contre le support (41), tandis que des moyens sont prévus pour solidariser une douille (48, 49) avec la tringle (39) en translation consécutivement au basculement du volet correspondant (28, 29), de façon que la douille (48, 49) comprime le ressort de rappel (47) tandis qu'inversement la seconde douille (49, 48) reste appliquée en butée, par sa collerette (52, 51), contre son support (41) et que la tringle (39) coulisse à l'intérieur de cette seconde douille.

5. Pressoir selon la revendication 4, caractérisé en ce que les moyens de solidarisation des douilles (48, 49) avec la tringle (39), alternativement dans les deux sens de translation de cette dernière, consistent, pour chaque douille, par exemple en une goupille (53, 54) traversant radialement la tringle (39) près de l'extrémité de la douille (48, 49) opposée à sa collerette (51, 52), et faisant saillie de façon à entraîner la douille (48, 49) à coulisse vers l'intérieur des supports (41) lorsque la tringle (39) se déplace dans un sens, et à laisser la douille (48, 49) bloquée en butée par sa collerette (51, 52) contre le support (41) lorsque la tringle (39) se déplace en sens inverse.

6. Pressoir selon l'une des revendications 1 à 5, caractérisé en ce que la porte (11) de sortie ou de déchargement est à manœuvre manuelle, articulée sur la partie terminale (12) de la cage (1) opposée à la porte annulaire (6), et peut être rendue amovible.

## Claims

1. A vintage press comprising a cylindrical rotatable cage (1) having a horizontal or inclined axis, provided internally with longitudinal members (25) which are parallel to one another and to its axis (X-X), traversed by an axial screw (26) connected with pressing plates, this cage (1) being moreover provided at one end with a first fixed annular door (6) having in its upper part an opening (7) for charging the grapes, and at its opposite end (12) with a second outlet door for the grapes after a pressing cycle, gear wheels (2) for driving the cage (1) in rotation being mounted coaxially at the ends of the latter, and the opening of the annular door (6) being surmounted by a charging hopper (8), characterised in that it comprises a safety device mounted between the hopper (8) and the charging opening (7) of the annular door (6) and which comprises means (28, 29, 37, 38) for automatically controlling the stoppage of the rotation of the cage (1) and the longitudinal members (25) in the event of the introduction of a foreign body in the charging opening, such as the hand (27) of an operator, which would be driven by a longitudinal member (25) against the edge (7a, 7b) of the charging opening (7), and the safety device comprises at least one pivotable flap (28) and preferably two flaps (28, 29) respectively placed above a radial edge (7a, 7b) of the charging opening (7) and mounted to be pivotable about an axis (31, 32) parallel to the axis (X-X) of the cage (1) and to the longitudinal members (25), this (or these) flaps being articulated to a transmission linkage (37) cooperating with an electric contact (38) which is capable of being actuated by the displacement of the linkage (37) resulting from a pivoting of the flap (28, 29) toward the edge (7a, 7b) of the charging opening (7) so as to automatically bring about the stoppage of the rotation of the longitudinal members (25) and the cage (1) upon the pivoting of the flap (28, 29) through a predetermined angle.

2. A press according to claim 1, characterised in that the safety device comprises two pivotable flaps (28, 29) and each of these flaps is connected at one of its ends with an arm (35, 36) perpendicular to the axis (31, 32) of the pivoting of the flap (28, 29) an end part of which is articulated to a rod (39) slidably mounted in fixed supports (41) and to which is fixed a slide (42) cooperating with the electric contact (38) in such manner as to actuate the latter after a predetermined travel of the rod (39) and slide (42), elastic means (47) for returning the flaps (28, 29) and the rod (39) being disposed between the supports (41) of the rod (39).

3. A press according to claim 2, characterised in that the slide (42) has a recess (44) in which the electric contact (38) is engaged when the flaps (28, 29) are in their normal position remote from the contiguous edges (7a, 7b) of the charging opening (7), the movement in translation of the slide (42) caused by the pivoting of a flap (28, 29) causing the contact (38) to leave the recess (44) and thereby bring about the stoppage of the rotation of the longitudinal members (25) and the cage (1).

4. A press according to one of the claims 2 and 3, characterised in that the means for returning the rod (39) and the flaps (28, 29) comprise a coil spring (47) mounted coaxially around the rod (39) between the fixed supports (41), and, at each end of the spring (47), a sleeve (48, 49) slidably mounted in the corresponding support (41) around the rod (39), each sleeve (48, 49) being provided with an end flange (51, 52) constantly biased by the spring (47) against the support (41), whereas means are provided for connecting a sleeve (48, 49) with the rod (39) in translation subsequent to the pivoting of the corresponding flap (28, 29), so that the sleeve (48, 49) compresses the return spring (47) whereas, inversely, the second sleeve (49, 48) remains applied by its flange (52, 51) against its support (41) and the rod (39) slides inside this second sleeve.

5. A press according to claim 4, characterised in that the means for connecting the sleeve (48, 49) with the rod (39), alternately in the two directions of translation of the latter, consist, for each sleeve, for example in a pin (53, 54) which radially extends through the rod (39) close to the end of the sleeve (48, 49) opposed to its flange (51, 52) and projecting in such manner as to drive the sleeve (48 49) slidably toward the interior of the supports (41) when the rod (39) is moved in one direction and to leave the sleeve (48, 49) blocked in abutment by its flange (51, 52) against the support (41) when the rod (39) moves in the opposite direction.

6. A press according to one of the claims 1 to 5, characterised in that the outlet or discharging door (11) is handled manually, articulated to the end part (12) of the cage (1) opposed to the annular door (6), and may be rendered removable.

**Patentansprüche**

1. Presse für Trauben, umfassend einen zylindrischen Drehbehälter (1) mit horizontaler oder geneigter Achse, der innen mit zueinander und zur Achse (X-X) parallelen Trägern (25) ausgestattet ist, durchquert von einer mit Klemmplatten fest verbundenen axialen Schraube (26), wobei dieser Behälter (1) außerdem an einem Ende mit einer ersten festen ringförmigen Türklappe (6), die an ihrem oberen Teil eine Öffnung (7) für das Beschicken mit den Trauben aufweist, und an seinem entgegengesetzten Ende (12) mit einer zweiten Türklappe zum Ausgeben der Trauben nach einem Preßzyklus ausgestattet ist, wobei Zahnräder (2) zum Mitnehmen des Behälters (1) in Rotation koaxial zu den Enden des letzteren angebracht sind und die Öffnung der ringförmigen Türklappe (6) von einem Beschicktungstrichter (8) überragt ist, dadurch gekennzeichnet, daß sie eine Sicherheitsvorrichtung aufweist, die zwischen dem Trichter (8) und der Beschickungsöffnung (7) der ringförmigen Türklappe (6) angebracht ist und die Mittel (28, 29, 37, 38) zur automatischen Betätigung des Anhaltens der Drehung des Behälters (1) und der Träger (25) in dem Fall aufweist, daß sich ein in die Beschickungsöffnung eingeführter Fremdkörper wie z. B. die Hand (27) einer Bedienungsperson durch einen Träger (25) gegen den Rand (7a, 7b) der Beschickungsöffnung (7) mitgenommen befände, und die Sicherheitsvorrichtung wenigstens eine (28) und vorzugsweise zwei (28, 29) Schwenkklappe(n) aufweist, die jeweils oberhalb eines radialen Randes (7a, 7b) der Beschickungsöffnung (7) angebracht ist (sind) und um eine zur Achse (X-X) des Behälters (1) und zu den Trägern (25) parallele Achse (31, 32) verkippbar angebracht ist (sind), wobei diese Klappe(n) auf einem Übertragungsgestänge (37) schwenkbar angebracht ist (sind), das mit einem elektrischen Kontakt (38) zusammenwirkt, der zur Betätigung durch die Verstellung des Gestänges (37) geeignet ist, die durch ein Kippen der Klappe (28, 29) zum Rand (7a, 7b) der Beschickungsöffnung (7) hervorgerufen worden ist, um das Anhalten der Drehung der Träger (25) des Behälters (1) automatisch zu betätigen, sowie die Klappe (28, 29) um einen vorbestimmten Winkel gekippt ist.

2. Presse nach Anspruch 1, dadurch gekennzeichnet, daß die Sicherheitsvorrichtung zwei Schwenkklappen (28, 29) aufweist, wobei jede der Klappen an einem ihrer Enden mit einem Arm (35, 36) senkrecht zur Kippachse (31, 32) der Klappe (28, 29) fest verbunden ist, von der ein Endteil gelenkig auf einer Stange (39) angebracht ist, die in festen Stützen (41) verstellbar angebracht ist und an der eine mit dem elektrischen Kontakt (38) auf eine solche Weise zusammenwirkende Gleitführung (42) befestigt ist, daß sie letzteren nach einem vorbestimmten Hub der Stange (39) und der Gleitführung (42) auslöst, wobei elastische Mittel (47) zum Zurückholen der Klappen (28, 29) und der Stange (39) zwischen den Stützen (41) der Stange (39) angeordnet sind.

3. Presse nach Anspruch 2, dadurch gekennzeichnet, daß die Gleitführung (42) eine Vertiefung (44) aufweist, in der sich der elektrische Kontakt (38) in Eingriff befindet, wenn die Klappen (28, 29) in ihrer normalen Stellung sind, entfernt von den benachbarten Rändern (7a, 7b) der Beschickungsöffnung (7), wobei die durch das Kippen einer Klappe (28, 29) hervorgerufene Translationsbewegung der Gleitführung (42) bewirkt, daß der Kontakt (38), der nun das Anhalten der Drehung der Träger (25) und des Behälters (1) auslöst, aus der Vertiefung (44) austritt.

4. Presse nach einem der Ansprüche 2 und 3, dadurch gekennzeichnet, daß die Mittel zum Rückholen der Stange (39) und der Klappen (28, 29) eine koaxial um die Stange (39) zwischen den festen Stützen (41) angebrachte Schraubenfeder (47) und an jedem Ende der Feder (47) eine verschiebbar in der entsprechenden Stütze (41) um die Stange (39) angebrachte Buchse (48, 49) umfassen, wobei jede Buchse (48, 49) mit einem Endflansch (51, 52) versehen ist, der durch die Feder (47) fortgesetzt gegen die Stütze (41) gedrückt ist, während Mittel vorgesehen sind, um eine Buchse (48, 49) mit der Stange (39) in Translationsbewegung folgend auf das Kippen der entsprechenden Klappe (28, 29) auf eine Weise fest zu verbinden, daß die Buchse (48, 49) die Rückholfeder (47) zusammendrückt, während umgekehrt die zweite Buchse (49, 48) im Anschlag durch ihren Flansch (52, 51) gegen ihre Stütze (41) gedrückt bleibt, und daß sich die Stange (39) im Inneren dieser zweiten Buchse verschiebt.

5. Presse nach Anspruch 4, dadurch gekennzeichnet, daß die Mittel zur festen Verbindung der Buchsen (48, 49) mit der Stange (39) abwechselnd in den beiden Translationsrichtungen der letzteren für jede Buchse beispielsweise aus einem Stift (53, 54) bestehen, der die Stange (39) in radialer Richtung in der Nähe des Endes der Buchse (48, 49) entgegengesetzt zu deren Flansch (51, 52) durchquert und auf solche Weise vorspringt, daß er die Buchse (48, 49) zum Inneren der Stützen (41) verschiebend mitnimmt, wenn sich die Stange (39) in einer Richtung verstellt, und die Buchse (48, 49) im Anschlag durch ihren Flansch (51, 52) gegen die Stütze (41) blockiert läßt, wenn sich die Stange (39) in umgekehrter Richtung verstellt.

6. Presse nach einem der Ansprüche 1 bis 5, dadurch gekennzeichnet, daß die Türklappe (11) zum Auslaß oder Entleeren zur manuellen Bedienung auf dem Endteil (12) des Behälters (1) gelenkig angebracht gegenüberliegend der ringförmigen Türklappe (6) ist und abnehmbar gemacht werden kann.

FIG. 1

FIG. 5

10 · 54 · 49 · 41 · 52 · 51 · 41 · 48 · 53 · 37 · 39 · 42 · 35 · 33 · 36 · H · 34 · 32 · 7. · 47 · 28 · 31 · 29 · 25 · F · G · 7a · 6 · 7b · 1

FIG. 2

16 · 17 · 18 · 19 · 14 · 11 · 15 · 15 · 22 · 21 · 12 · 23 · 24

0 141 694

FIG. 3

0 141 694

FIG.4